# EUROPEAN PATENT SPECIFICATION

(11) **EP 2 081 794 B1**
(45) Date of publication and mention of the grant of the patent: **14.11.2012**
(21) Application number: 07824526.3
(22) Date of filing: 12.11.2007
(51) Int. Cl.: B60R 22/46, B60R 22/10, B60N 2/28, B60R 22/34, B60R 22/357, B60R 22/48

(54) **CHILD-SEAT BELT TENSIONER**
KINDERSITZGURTSPANNER
TENDEUR DE CEINTURE DE SIÈGE POUR ENFANT

(30) Priority: 10.11.2006 GB 0622538
(43) Date of publication of application: 29.07.2009
(73) Proprietor: Britax Römer Kindersicherheit GmbH, 89077 Ulm (DE)
(72) Inventor: CARINE, David Shaun, Nr Andover, Hampshire SP11 6DF (GB); HUDSWELL, Michael Roy, Derby, Derbyshire DE74 2HP (GB)
(74) Representative: Bosch, Matthias
(86) International application number: PCT/GB2007/004297
(87) International publication number: WO 2008/056169

(56) References cited:
- EP-A- 0 687 603
- WO-A-2005/000625
- DE-U1-202005 013 257
- US-A1- 2004 011 277

## Description

The present invention relates to child seat arrangements for holding a child within the interior of a vehicle (see, for example, DE 20 2005 013 257 U1, corresponding to the preamble of independent product claim 1 and independent method claim 9, respectively, or EP 0 687 603 A1, corresponding to the preamble of independent product claim 8).

In this regard, child seats take on many forms, but in general for babies and smaller children, the seat is normally provided with a harness having harness shoulder straps that pass over the child's shoulders and connect with a lower strap configuration extending up between the child's legs.

Conventionally, when installing a child, the harness shoulder straps are initially intended to be relatively loose, allowing them to be fitted more easily around the child's arms and shoulders. Once the harness shoulder straps are connected to the lower strap configuration, using for example a buckle, the harness is tightened by pulling on a strap extending from the shoulder straps which is fed through the seat to a clamping arrangement provided in a lower front part of the seat.

The amount of tension applied to the harness will inevitably vary depending on, for example, who is pulling on the strap, their ease of access to the strap, and their care and/or understanding on how tight the harness should be. As such, it is clear that the tension applied to the harness can and will vary considerably.

This solution is not ideal, since the amount of tension in the harness will dramatically affect the capability of the child seat in functioning correctly to best protect the child and prevent injury in the event of an accident. In this connection, it is estimated that 80% of children are installed incorrectly in their seat, and a large proportion of these are down to incorrect harness tension.

Strap or belt tension indicators do exist which try to remedy this problem. Various types exist (e.g. US 2004/0011277 A1), and these generally provide an indication when the correct tension in a belt or strap has been reached, or a warning when it has not. Useful though they are, such tension indicators have their limitations in that users often become lazy and ignore their presence. Moreover, such indicators are not generally able to indicate when the harness is in fact overtightened.

Furthermore, because of access issues when trying to install a child, namely where it is necessary to lean into the vehicle from one side, many users find it awkward or difficult to apply sufficient tension to the harness.
This may be the case with the child seat described in the above-mentioned DE 20 2005 013 257 U1. This child seat comprises a belt system with a belt-load limiter and a central belt provided for tensioning the belt system. The belt system is manually tensioned by pulling on the central belt. To reach the central belt it is necessary to lean into the vehicle.
WO 2005/000625 A2 describes a child restraint system comprising a retractor attached to a child seat. A restraint harness is coupled at one end to the automatic retractor and is releasably attached at another end to a buckle attached to the child seat. The retractor is normally biased to tighten the harness but will yield to an opposite force sufficient to overcome the normal bias. The harness may be further tightened by actuating a manual adjustment device.
The above-mentioned EP 0 687 603 A1 describes a child seat restraining system that is to be affixed in an automobile and a three or multiple point seat belt system including a belt length adjustment device that has a belt reel with which the effective belt length of at least one piece of belt can be increased or decreased by counteracting or cooperating with a spring force. The belt length adjustment device includes a belt blocking device which is located behind the belt reel in the unwinding position.
An object of the present invention is to try to alleviate such problems as described above associated with the known arrangements.
According to an aspect of the present invention as defined in claim 1 there is provided a tensioning apparatus for a restraining belt of a child seat, the apparatus comprising: means for applying a tension to said restraining belt; means for detecting said tension applied to said restraining belt; and means for limiting said applied tension to said restraining belt to a predetermined maximum tension, wherein said means for applying tension to said restraining belt is only activated to apply tension upon at least a minimum tension being applied to the belt, from an alternative source, the tensioning apparatus further comprising sensors for detecting the presence of said minimum tension and said maximum tension. As such, the correct tension in a restraining belt can be reliably set for each use of the seat, regardless of the user installing the child in the seat.
Conveniently, the alternative source comprises a user applying tension manually. In this way, the user has confidence in fully being in control of the operation of the apparatus.

Conveniently, said means for applying tension comprises a driven roller provided in close proximity to a guide roller, the driven roller and guide roller defining there-between a serpentine belt path for the belt. With this arrangement a capstan configuration can be realized to enhance the tensioning and de-tensioning operations.

Preferably, first visual indication means are provided for indicating when said minimum tension is being applied. Conveniently, second visual indication means are provided for indicating when said maximum tension is applied. These indication means afford confidence to a user as to the correct operation of the apparatus. Each visual indication means may typically be an LED and a single flash thereof can be used to designate a battery low indicator.

In preferred embodiments, the tensioning apparatus further comprises a sudden acceleration/deceleration sensor in communication with the means for applying tension, the sudden acceleration/deceleration sensor activating the means for applying tension to apply a pre-load to the tensioned belt in the event of a sudden acceleration/deceleration. In this way, the apparatus can further enhance the ability of the child seat to prevent serious injury in the event of an accident.

Preferably, the pre-load supplements the tension previously applied for an installed child.

According, to a further aspect of the present invention as defined in claim 8 there is provided a tensioning apparatus for a restraining belt of a child seat, the apparatus comprising: tension applying means for applying tension to said belt; and activating means for activating and de-activating said tension applying means; said activating means activating said tension applying means to apply tension to said belt only when at least a predetermined minimum tension is applied to the belt from an alternate source to the tension applying means, said activating means de-activating said tension applying means to prevent further tension being applied to said belt when a predetermined maximum tension has been reached.

According to yet a further aspect of the present invention as defined in claim 9 there is provided a method of tensioning a restraining belt of a child seat, the method comprising: an activating means detecting a user applying a first applied tension to said belt; said activating means then activating a tension applying means to supplement said user applied tension with a second applied tension, said activating means activating said tension applying means to apply said second applied tension to said belt only whilst said first applied tension is maintained.

Preferably, said activating means de-activates said tension applying means to prevent further tension being applied to said belt when a predetermined maximum tension has been reached.

An example of the present invention will now be described, with reference to the accompanying drawing, in which:-

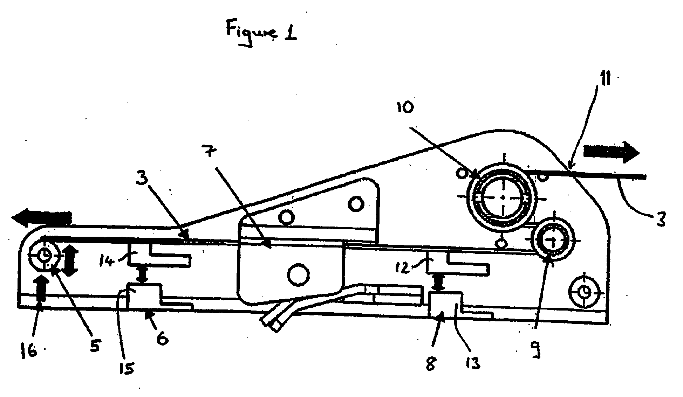

Figure 1 shows a cross-sectional view taken through a base part of a child seat of the present invention.

As shown in Figure 1 there is provided a cross-sectional view through a base part 1 of a child séat 2. A webbing, belt or strap 3 passes through the base part and connects at one end 4 to the child harness (not shown). The webbing follows a path which passes a rear roller 5, a tension sensor 6, a locking pawl 7, an activation sensor 8, a guide roller 9 and a driven roller 10 before exiting the base part at a front opening 11. A user can pull on the webbing where it exits the base part. The driven roller and guide roller are provided in close proximity and define a serpentine S-shaped belt path.

In use, a user pulls on the webbing at the front of the seat, which activates the activation sensor 8. In this regard, the activation sensor has upper and lower contacts 12, 13 respectively. The upper contact 12 is naturally biased upwardly by spring means. When the webbing is pulled by a user, the upper contact is moved toward the lower contact 13 thereby opening or closing a switch powering a motor (not shown) for the driven roller 10. An indication that the driven roller is being activated may be provided in the form of a yellow LED being turned on. The webbing starts to be wound through and tensioned by the roller, but only as long as the user is applying enough force to the belt to activate the activation sensor 8. As such, the driven roller, in combination with the guide roller, acts as a capstan for tensioning the webbing, provided a low or base level tension has been is being applied by a user.

As the tension in the webbing starts to reach the required level, the rear roller 5 begins to be urged down against a biasing force 16 of a spring applied thereto, thereby opening or closing the upper and lower contacts 14, 15 of the tension sensor 6. When the required tension is reached, the tension sensor 6 opens or closes and power to the motor is cut off, thereby preventing further rotation of the driven roller 10. At this point a green LED is turned on indicating a correct tension in the harness.

The user can then release the webbing and the green LED can switch off. The child is now installed in the child seat with the correct harness tension.

The user has used less effort pulling the webbing to achieve the correct tension in the harness.

Releasing the webbing is performed as in a conventional harness by releasing webbing locking pawl 7. Since the mechanism uses a capstan arrangement, on release the webbing can slide over the rollers as there is no load on the user end of the webbing.

A simple clutch mechanism can be integrated into the driven roller to provide a manual override in case of battery or other electrical/power failure. This will allow the driven roller to rotate to release the belt without having to drivingly reverse rotate the driven roller.

The sensors of the apparatus may further comprise means for sensing a sudden deceleration or acceleration, such as experienced in the event of an accident. Typically a mercury switch provides such a function. This can be connected to means for driving the driven roller to thereby pretension the harness. In this respect, the apparatus may be connectable into the vehicle electrical system or loom, to pick up such signals of an impending accident or collision already provided by sensors within the vehicle. It is considered that the harness may be pretensioned in this way from a base tension of around 20 Newtons to 75-150 Newtons. The apparatus should incorporate means for reducing the tension from this pre-tensioned state after the sudden deceleration.

The applied pre-tension in an accident or collision scenario can supplement the tension in the harness for the installed child.

The tension sensors may be used to monitor tension in the webbing for the purpose of establishing whether the webbing tension has relaxed undesirably. This may be communicated, for example using a wireless connection, to a dashboard indicator to advise a parent or carer.

## Claims

1. Tensioning apparatus for a restraining belt (3) of a child seat, the apparatus comprising:
tension applying means (9, 10) for applying a tension to said restraining belt (3);
detecting means (5, 16) for detecting said tension applied to said restraining belt; and
means for limiting said applied tension to said restraining belt (3) to a predetermined maximum tension, wherein
said tension applying means (9, 10) is only activated to apply tension to said restraining belt (3) upon at least a minimum tension being applied to the belt (3), from an alternative source, **characterised by**
the tensioning apparatus further comprising sensors (8, 6) for detecting the presence of said minimum tension and said maximum tension.

2. Tensioning apparatus according to claim 1, wherein the alternative source comprises a user-applied tension.

3. Tensioning apparatus according to any preceding claim, wherein said tension applying means (9, 10) comprises a driven roller (1 0) provided in close proximity to a guide roller (9), the driven roller (10) and guide roller (9) defining there-between a serpentine belt path for the belt (3).

4. Tensioning apparatus according to claim 1, wherein first visual indication means are provided for indicating when said minimum tension is being applied.

5. Tensioning apparatus according to any preceding claim, wherein second visual indication means are provided for indicating when said maximum tension is applied.

6. Tensioning apparatus according to any preceding claim, further comprising a sudden acceleration/deceleration sensor in communication with said tension applying means (9, 10) , the sudden acceleration/deceleration sensor activating said tension applying means (9, 10) to apply a pre-load to the tensioned belt (3) in the event of a sudden acceleration/deceleration.

7. Tensioning apparatus according to any preceding claim, where the pre-load supplements the tension previously applied for an installed child.

8. Tensioning apparatus for a restraining belt (3) of a child seat, the apparatus comprising:
tension applying means (9, 10) for applying tension to said belt (3); and
activating means for activating and de-activating said tension applying means (9, 10);
**characterised by** said activating means activating said tension applying means (9, 10) to apply tension to said belt (3) only when at least a predetermined minimum tension is applied to the belt (3) from an alternate source to the tension applying means (9, 10), said activating means de-activating said tension applying means (9, 10) to prevent further tension being applied to said belt (3) when a predetermined maximum tension has been reached.

9. A method of tensioning a restraining belt (3) of a child seat, the method comprising:
an activating means detecting a user applying a first applied tension to said belt; **characterised by** said activating means then activating a tension applying mean (9, 10) to supplement said user applied tension with a second applied tension, said activating means activating said tension applying means to apply said second applied tension to said belt (3) only whilst said first applied tension is maintained.

10. A method according to claim 9, wherein said activating means de-activates said tension applying mean (9, 10) to prevent further tension being applied to said belt when a predetermined maximum tension has been reached.

## Patentansprüche

1. Spannvorrichtung für einen Rückhaltegurt (3) eines Kindersitzes, wobei die Vorrichtung aufweist:
eine Zugaufbringungsvorrichtung (9, 10) zum Aufbringen von Zug auf den Rückhaltegurt (3);
eine Ermittlungsvorrichtung (5, 16) zum Ermitteln des auf den Rückhaltegurt aufgebrachten Zugs; und
eine Einrichtung zum Begrenzen des auf den Rückhaltegurt (3) aufgebrachten Zugs auf einen maximalen Zug, wobei
die Zugaufbringungsvorrichtung (9, 10) nur aktiviert wird, um Zug auf den Rückhaltegurt (3) aufzubringen, nachdem wenigstens ein minimaler Zug auf den Gurt (3) von einer anderen Quelle aufgebracht worden ist,
**dadurch gekennzeichnet, dass**
die Zugaufbringungsvorrichtung des Weiteren Sensoren (8, 6) zum Feststellen des Vorhandensein des minimalen Zugs und des maximalen Zugs aufweist.

2. Spannvorrichtung nach Anspruch 1, wobei die andere Quelle von einem Benutzer aufgebrachten Zug umfasst.

3. Spannvorrichtung nach einem der vorhergehenden Ansprüche, wobei die Zugaufbringungsvorrichtung (9, 10) eine Antriebsrolle (10) aufweist, die in enger Nähe zu einer Führungsrolle (9) vorgesehen ist, wobei die Antriebsrolle (10) und die Führungsrolle (9) einen gewundenen Gurtpfad für den Gurt (3) zwischen sich definieren.

4. Spannvorrichtung nach Anspruch 1, wobei erste visuelle Anzeigemittel vorgesehen sind, um anzuzeigen, wann der minimale Zug aufgebracht ist.

5. Spannvorrichtung nach einem der vorhergehenden Ansprüche, wobei zweite visuelle Anzeigemittel vorgesehen sind, um anzuzeigen, wann der maximale Zug aufgebracht ist.

6. Spannvorrichtung nach einem der vorhergehenden Ansprüche, die des Weiteren einen Sensor für plötzliche Beschleunigung/Verlangsamung aufweist, der mit der Zugaufbringungseinrichtung (9, 10) in Verbindung steht, wobei der Sensor für plötzliche Beschleunigung/Verlangsamung die Zugaufbringungseinrichtung (9, 10) aktiviert, um im Fall einer plötzlichen Beschleunigung/Verlangsamung eine Vorspannung auf den gespannten Gurt (3) aufzubringen.

7. Spannvorrichtung nach einem der vorhergehenden Ansprüche, wobei die Vorspannung den vorher für ein im Sitz angeschnalltes Kind aufgebrachten Zug unterstützt.

8. Spannvorrichtung für einen Rückhaltegurt (3) eines Kindersitzes, wobei die Vorrichtung aufweist:
eine Zugaufbringungseinrichtung (9, 10) zum Aufbringen von Zug auf den Gurt (3); und
eine Aktivierungseinrichtung zum Aktivieren und Deaktivieren der Zugaufbringungseinrichtung (9, 10);
**dadurch gekennzeichnet, dass**
die Aktivierungseinrichtung die Zugaufbringungseinrichtung (9, 10) aktiviert, um Zug nur dann auf den Gurt (3) aufzubringen, wenn wenigstens ein vorgegebener minimaler Zug von einer anderen Quelle als der Zugaufbringungseinrichtung (9, 10) auf den Gurt (3) aufgebracht wurde, wobei die Aktivierungseinrichtung die Zugaufbringungseinrichtung (9, 10) deaktiviert, um zu verhindern, dass weiterer Zug auf den Gurt (3) aufgebracht wird, wenn ein vorgegebener maximaler Zug erreicht ist.

9. Verfahren zum Spannen eines Rückhaltegurts (3) eines Kindersitzes, wobei das Verfahren umfasst:
Feststellen durch eine Aktivierungseinrichtung, dass ein Benutzer einen ersten Zug auf den Gurt aufbringt;
**gekennzeichnet durch**
anschließendes Aktivieren einer Zugaufbringungseinrichtung (9, 10) **durch** die Aktivierungseinrichtung, um den von dem Benutzer aufgebrachten Zug mit einem zweiten aufgebrachten Zug zu unterstützen, wobei die Aktivierungseinrichtung die Zugaufbringungseinrichtung aktiviert, um nur den zweiten Zug auf den Gurt (3) aufzubringen, während der erste aufgebrachte Zug beibehalten wird.

10. Verfahren nach Anspruch 9, wobei die Aktivierungseinrichtung die Zugaufbringungseinrichtung (9, 10) deaktiviert, um zu verhindern, dass weiterer Zug auf den Gurt aufgebracht wird, wenn ein vorgegebener maximaler Zug erreicht ist.

## Revendications

1. Appareil de mise sous tension pour une ceinture (3) de maintien d'un siège d'enfant, l'appareil comprenant :
un moyen d'application de tension (9, 10) pour appliquer une tension à ladite ceinture (3) de maintien ;
un moyen de détection (5, 16) pour détecter ladite tension appliquée à ladite ceinture de maintien ; et
un moyen pour limiter ladite tension appliquée à ladite ceinture (3) de maintien à une tension maximum prédéterminée, dans lequel
ledit moyen d'application de tension (9, 10) n'est activé que pour appliquer une tension à ladite ceinture (3) de maintien que lorsqu'au moins une tension minimum est appliquée à la ceinture (3), par une autre source, **caractérisé par**
l'appareil de mise sous tension comprenant en outre des capteurs (8, 6) pour détecter la présence de ladite tension minimum et de ladite tension maximum.

2. Appareil de mise sous tension selon la revendication 1, dans lequel l'autre source comprend une tension appliquée par un utilisateur.

3. Appareil de mise sous tension selon une quelconque revendication précédente, dans lequel ledit moyen d'application de tension (9, 10) comprend un cylindre entraîné (10) prévu en étroite proximité avec un cylindre guide (9), le cylindre entraîné (10) et le cylindre guide (9) définissant entre eux un chemin de ceinture en serpentin pour la ceinture (3).

4. Appareil de mise sous tension selon la revendication 1, dans lequel un premier moyen d'indication visuelle est prévu pour indiquer quand ladite tension minimum est appliquée.

5. Appareil de mise sous tension selon une quelconque revendication précédente, dans lequel un deuxième moyen d'indication visuelle est prévu pour indiquer quand ladite tension maximum est appliquée.

6. Appareil de mise sous tension selon une quelconque revendication précédente, comprenant en outre un capteur d'accélération/décélération soudaine en communication avec ledit moyen d'application de tension (9, 10), le capteur d'accélération/décélération soudaine activant ledit moyen d'application de tension (9, 10) pour appliquer une pré-charge à la ceinture (3) sous tension dans le cas d'une accélération/décélération soudaine.

7. Appareil de mise sous tension selon une quelconque revendication précédente, où la pré-charge complète la tension précédemment appliquée pour un enfant installé.

8. Appareil de mise sous tension pour une ceinture (3) de maintien d'un siège d'enfant, l'appareil comprenant :
un moyen d'application de tension (9, 10) pour appliquer une tension à ladite ceinture (3) ; et
un moyen d'activation pour activer et désactiver ledit moyen d'application de tension (9, 10) ;
**caractérisé par** ledit moyen d'activation n'activant ledit moyen d'application de tension (9, 10) pour appliquer une tension à ladite ceinture (3) que lorsqu'au moins une tension minimum prédéterminée est appliquée à la ceinture (3) par une autre source que le moyen d'application de tension (9, 10), ledit moyen d'activation désactivant ledit moyen d'application de tension (9, 10) pour empêcher que plus de tension ne soit appliquée à ladite ceinture (3) lorsqu'une tension maximum prédéterminée a été atteinte.

9. Procédé de mise sous tension d'une ceinture (3) de maintien d'un siège d'enfant, le procédé comprenant :
un moyen d'activation détectant un utilisateur appliquant une première tension appliquée à ladite ceinture ;
**caractérisé par** ledit moyen d'activation activant alors un moyen d'application de tension (9, 10) pour compléter ladite tension appliquée par l'utilisateur avec une deuxième tension appliquée, ledit moyen d'activation n'activant ledit moyen d'application de tension pour appliquer ladite deuxième tension appliquée à ladite ceinture (3) que lorsque ladite première tension appliquée est maintenue.

10. Procédé selon la revendication 9, dans lequel ledit moyen d'activation désactive ledit moyen d'application de tension (9, 10) pour empêcher que plus de tension ne soit appliquée à ladite ceinture lorsqu'une tension maximum prédéterminée a été atteinte.
